# FASCICULE DE BREVET EUROPEEN

(11) **EP 4 222 616 B1**
(45) Date de publication et mention de la délivrance du brevet: **25.02.2026**
(21) Numéro de dépôt: 20796625.0
(22) Date de dépôt: 30.09.2020
(51) Int. Cl.: G06F 16/9535, G06F 21/62, H04L 9/40

(54) **TERMINAL, DISPOSITIF DE PERSONNALISATION DE REQUÊTES DE SERVICES ET PROCÉDÉS PERMETTANT UN SERVICE PERSONNALISÉ**
ENDGERÄT, VORRICHTUNG ZUM ANPASSEN VON DIENSTANFORDERUNGEN UND VERFAHREN ZUM ERMÖGLICHEN EINES ANGEPASSTEN DIENSTES
TERMINAL, DEVICE FOR CUSTOMISING SERVICE REQUESTS AND METHODS ENABLING A CUSTOMISED SERVICE

(43) Date de publication de la demande: 09.08.2023
(73) Titulaire: Orange, 92130 Issy-les-Moulineaux (FR)
(72) Inventeur: KIRSCHBAUM, Patrick, 92326 CHÂTILLON CEDEX (FR); GASPAR, Sylvie, 92326 CHATILLON CEDEX (FR)
(74) Mandataire: Cabinet Beau de Loménie
(86) Numéro de dépôt international: PCT/FR2020/051708
(87) Numéro de publication internationale: WO 2021/064323

(56) Documents cités:
- GB-A- 2 549 786
- GB-A- 2 549 791
- US-A1- 2014 173 695

## Description

### Technique antérieure

L'invention se rapporte au domaine général des télécommunications. Elle concerne plus particulièrement la fourniture d'un service.

Conformément à l'état de la technique, certains sites web ou applications logicielles utilisent un identifiant unique anonyme pour chaque utilisateur afin de lui fournir un service personnalisé. Par exemple, un site web d'un commerçant peut fournir à un utilisateur un contenu en fonction d'un historique d'achats de cet utilisateur, ou en fonction d'un historique de pages web consultées par cet utilisateur.

Selon l'état de la technique, un utilisateur peut être identifié par des informations personnelles de contact, telles que son adresse mail ou son numéro de téléphone, généralement associées à un mot de passe. Alternativement, l'utilisateur peut être identifié par un de ses comptes utilisateurs sur les réseaux sociaux, par exemple son compte Facebook ou LinkedIn (marques déposées).

Ces méthodes de l'art antérieur ne sont pas satisfaisantes car elles obligent l'utilisateur à fournir certaines informations personnelles pour recevoir un service. Cela est contradictoire avec les règlementations de protection des informations personnelles, comme le règlement général sur la protection des données RGPD 2018 en Europe.

Il existe donc un besoin en une solution qui ne présente pas les inconvénients des méthodes connues de l'état de l'art pour permettre à un utilisateur d'accéder à un service personnalisé sans divulguer ses informations personnelles, autrement dit de manière anonyme.

Enfin, le document GB 2 549 786 A1, décrivant un procédé et un système de stockage et de contrôle d'accès à des données comportementales personnalisées anonymes, est également connu.

### Exposé de l'invention

L'invention vise un procédé de demande de service personnalisé par un terminal de communication selon la revendication1.

Corrélativement, l'invention vise un terminal de communication configuré pour demander un service personnalisé selon la revendication 13.

Le terminal, conforme à l'invention, met en œuvre le procédé de demande de service personnalisé selon l'invention.

Les caractéristiques et avantages du procédé de demande de service personnalisé selon l'invention présentés ci-après s'appliquent de la même façon à un terminal conforme à l'invention, et vice-versa. Conformément à l'invention, le terminal peut être un téléphone de type smartphone, une tablette, une montre connectée, ou tout autre dispositif communicant, notamment équipé d'un lecteur d'empreinte. Au sens de l'invention, l'identifiant unique anonyme permet d'identifier un compte auprès du dispositif de personnalisation de requête de service. Le terminal insère l'identifiant dans ses requêtes pour que le dispositif de personnalisation reconnaisse que ces requêtes correspondantes au même compte. Autrement dit, l'identifiant unique anonyme permet d'identifier toutes les requêtes venant du terminal sans divulguer, ni au(x) dispositif(s) de fourniture de services, ni au dispositif de personnalisation, aucune information ni sur le terminal lui-même (adresse MAC, marque, modèle), ni sur l'utilisateur du terminal (nom, adresse mail, numéro de téléphone).

L'invention permet à l'utilisateur du terminal de recevoir une réponse à la requête de service via un compte associé à l'identifiant unique anonyme, sans avoir fourni d'informations personnelles telles que son adresse mail, son numéro de téléphone ou un compte sur un réseau social.

L'identifiant unique anonyme selon l'invention est un identifiant anonyme, ne permettant pas d'identifier l'utilisateur du terminal. L'identifiant unique anonyme selon l'invention est associé à un compte sur le dispositif de personnalisation, pour le terminal.

L'identifiant unique anonyme peut constituer un code unique d'application, pour une application logicielle installée sur le terminal, cette application comportant des instructions pour l'exécution des étapes d'un procédé de demande de service personnalisé selon l'invention.

Dans un mode de réalisation, l'identifiant unique anonyme est obtenu à l'aide d'une fonction de génération aléatoire (une fonction « random » en anglais). En pratique, cette fonction de génération aléatoire est configurée pour ne pas générer des identifiants identiques et assurer statistiquement que tous les identifiants générés soient uniques.

Dans un mode de réalisation, le terminal génère lui-même l'identifiant unique anonyme par exemple en exécutant une fonction de génération aléatoire.

En particulier, l'obtention de l'identifiant unique anonyme par le terminal comporte :
- un envoi au dispositif de personnalisation d'une demande d'un identifiant unique anonyme; et
- une réception de l'identifiant unique anonyme en provenance du dispositif de personnalisation.

Dans un autre mode de réalisation, le dispositif de personnalisation peut générer l'identifiant unique anonyme à l'aide d'une fonction de génération aléatoire.

Dans un mode de réalisation, le procédé de demande de service personnalisé comporte :
- un envoi d'une requête de service associée à l'identifiant unique anonyme à destination du dispositif de fourniture du service ; et
- suite à cet envoi, une réception d'une réponse personnalisée provenant du dispositif de fourniture de service, la réponse personnalisée résultant d'un traitement mis en œuvre par le dispositif de fourniture de service en fonction d'une requête modifiée reçue du dispositif de personnalisation de requête de service, la requête modifiée ayant été générée par le dispositif de personnalisation de requête de service à partir de la requête de service envoyée et de l'identifiant unique anonyme associé.

Dans un mode de réalisation, le procédé de demande de service personnalisé comporte en outre une étape de capture d'un code relatif au service, la requête de service envoyée par le terminal est soit constituée par un requête de service initiale en fonction du code capturé soit une première requête de service obtenue en fonction de la requête de service initiale. Dans ce mode, le terminal comporte en outre un capteur de code, par exemple, ce capteur comportant une caméra, un récepteur radio tel que NFC, Zigbee ou étant apte à numériser un code, etc.

En particulier, le terminal génère une première requête de service en fonction de :
- la requête de service initiale obtenue en fonction du code capturé, et
- l'identifiant unique anonyme du terminal pour le dispositif de personnalisation.

L'invention permet donc à l'utilisateur du terminal de recevoir facilement et de façon anonyme un service personnalisé. Il suffit que l'utilisateur photographie le code en utilisant son terminal. Le terminal, mettant en œuvre le procédé de l'invention, génère la première requête comportant l'identifiant unique anonyme et la requête de service initiale résultant du code capturé et envoie cette première requête au dispositif de personnalisation pour accéder au service.

En particulier, le code peut être un code de type « QR code » ou de type « NFC tag ».

Un programme installé sur le terminal pour mettre en œuvre le procédé de demande de service personnalisé conforme à l'invention, et le code peuvent être gérés par une même entité administrative, par exemple une même entreprise développant une application logicielle d'achat de produits, et proposant des codes collés sur des produits vendus par cette entreprise.

Deux terminaux numérisant un même code peuvent accéder à deux services différents. En effet, comme les deux terminaux ont des identifiants uniques différents, les contenus des requêtes envoyées au dispositif de personnalisation sont différents. Selon une utilisation de l'invention, lorsque le code identifie un produit commercialisé dans un magasin, les prix peuvent être différents pour le même produit, par exemple si l'un des identifiants uniques correspond à un compte qui bénéficie d'une réduction.

Dans un mode de réalisation de l'invention, l'obtention d'un identifiant est mise en œuvre sur réception par le dispositif de demande de service personnalisé d'une notification du terminal suite à un déverrouillage réussi du dispositif de demande de service personnalisé.

Dans un mode de réalisation de l'invention, l'obtention d'un identifiant est mise en œuvre sur réception par le dispositif de demande de service personnalisé d'une notification du terminal d'une notification suite à un premier déverrouillage réussi du dispositif de demande de service personnalisé.

Ces deux modes permettent de vérifier que le dispositif de demande de service personnalisé est utilisé par le propriétaire du terminal ou son utilisateur habituel, puisqu'il a réussi à le déverrouiller, par exemple en utilisant un code PIN ou une empreinte digitale de l'utilisateur. Ils permettent donc, lorsque le déverrouillage du dispositif de demande de service personnalisé est pris en charge par le terminal, la notification d'autorisation de déverrouillage transmise par le terminal, notamment, un dispositif système du terminal au dispositif de demande de service personnalisé, soit utilisée pour déclencher l'obtention de l'identifiant unique anonyme.

En outre, ces modes permettent de s'assurer que l'identifiant unique anonyme est obtenu dans le cadre d'une utilisation licite du dispositif de demande de service personnalisé. L'identifiant obtenu est enregistré dans une mémoire du terminal et sera inclus dans les requêtes émises par le terminal vers le dispositif de personnalisation. De cette manière, l'identifiant permet d'identifier un compte associé à l'utilisateur habituel du terminal, tout en préservant l'anonymat de l'utilisateur.

L'obtention de l'identifiant unique anonyme étant conditionnée au déverrouillage du dispositif de demande de service personnalisé du terminal, si le terminal est un terminal multi-utilisateurs, un identifiant unique anonyme distinct est associé à chaque utilisateur du terminal via un compte distinct auprès du couple dispositif de demande de service personnalisé - dispositif de personnalisation. L'invention vise également un procédé de personnalisation de requêtes de service par un dispositif de personnalisation de requête de service selon la revendication 7.

Corrélativement, l'invention vise un dispositif de personnalisation de requêtes de service selon la revendication 14.

Le dispositif de personnalisation conforme à l'invention met en œuvre le procédé de personnalisation de requêtes de de service selon l'invention. Les caractéristiques et avantages du procédé de personnalisation selon l'invention présentés ci-après s'appliquent de la même façon à un dispositif de personnalisation conforme à l'invention, et vice-versa.

Le dispositif de personnalisation conforme à l'invention peut être connecté, via un réseau de télécommunications, à plusieurs terminaux, y compris des terminaux conformes à l'invention. De plus, le dispositif de personnalisation conforme à l'invention est connecté à un ou plusieurs dispositifs de fourniture de services et permet de demander au moins un service fourni par ce ou ces dispositifs de fournitures de services.

Dans un mode de réalisation, le dispositif de personnalisation conforme à l'invention obtient l'identifiant unique anonyme en le générant, par exemple à l'aide d'une fonction de génération aléatoire, suite à la réception d'une demande en provenance d'un terminal conforme à l'invention.

Dans un autre mode, le dispositif de personnalisation conforme à l'invention obtient l'identifiant unique anonyme en le recevant d'un terminal conforme à l'invention.

En particulier, lorsque le terminal envoie l'identifiant unique anonyme au dispositif de personnalisation pour la première fois, il peut l'envoyer seul, ou compris dans une requête de demande d'un service. Dans le deuxième cas, l'étape d'obtention de l'identifiant unique anonyme par le dispositif de personnalisation est mise en œuvre suite à la réception d'une requête comportant cet identifiant.

La mise à jour de la base de données par l'enregistrement de l'information relative à l'accès permet de tracer les demandes de services en utilisant l'identifiant unique anonyme. Le dispositif de personnalisation peut ainsi collecter des données utiles pour une gestion de relations-clients pour les services auxquels elle permet d'accéder. En particulier, la base de données gérée par le dispositif de personnalisation conforme à l'invention peut être partagée pour plusieurs services, notamment lorsque le dispositif de personnalisation est connecté à différents dispositifs de fournitures de services.

Dans un mode de réalisation de l'invention, le procédé de personnalisation de requêtes de service comporte une consultation de la base de données, la deuxième requête étant obtenue par modification de la première requête en fonction d'un résultat de la consultation de la base de données.

Dans ce mode, le gestionnaire de demande du dispositif de personnalisation, conforme à l'invention, est configuré pour consulter la base de données et pour obtenir la deuxième requête par modification de la première requête en fonction d'un résultat de la consultation de la base de données.

A titre d'exemple, le dispositif de personnalisation conforme à l'invention peut enrichir ou modifier la première requête par des données sur un historique d'achats effectués par le même compte identifié par l'identifiant unique anonyme, et obtenir ainsi la deuxième requête modifiée qui sera transmise au dispositif de fourniture de service. Le dispositif de fourniture de service peut alors fournir une réponse personnalisée, par exemple des pages web relatives à des produits susceptibles d'intéresser l'utilisateur associées à l'identifiant unique anonyme, ou des remises spéciales à partir d'un certain nombre d'achats sans que le dispositif de fourniture de service n'ait connaissance de cet identifiant unique anonyme, ni même d'une identité de l'utilisateur ou de son terminal. L'utilisateur du terminal conforme à l'invention bénéficie donc du service personnalisé sans avoir donné des identifiants personnels comme une adresse mail ou un numéro de téléphone.

Selon un autre exemple, le dispositif de personnalisation conforme à l'invention obtient la deuxième requête en enrichissant la première requête par un statut relatif à un nombre de demandes d'un même service en utilisant l'identifiant unique anonyme, par exemple un statut parmi « visiteur », « client » et «client premium ». En recevant cette requête modifiée, le dispositif de fourniture de services de ce service peut fournir un service personnalisé en fonction du statut auquel l'identifiant unique anonyme est associé.

Dans un mode de réalisation, le procédé de demande de service personnalisé selon l'invention, mis en œuvre par le terminal, comporte en outre une étape d'envoi au dispositif de personnalisation d'une information de localisation du terminal, telle qu'une position GPS (pour « Global Positionning System » en anglais). Cette information permet au dispositif de personnalisation de diriger la requête à un dispositif de fourniture de service déterminé en fonction de l'information de localisation. Par exemple, si la requête est relative à un service offert par un site d'un commerçant international, le dispositif de personnalisation peut diriger la requête vers un dispositif de fourniture de service fournissant ce service, dans le pays correspondant à la localisation du terminal, par exemple « orange.fr » pour un terminal en France et « orange.be » pour un terminal en Belgique.

Selon un autre exemple, l'information sur la localisation du terminal peut être transmise du dispositif de personnalisation conforme à l'invention à un dispositif de fourniture de services, le dispositif de fourniture de services fournissant un service personnalisé en fonction de cette information sur la localisation. Par exemple, si la requête est relative à un service de communication sur des événements, le dispositif de fourniture de services peut fournir un service de communication sur les événements se déroulant dans la même région géographique où se trouve le terminal.

L'invention vise également un programme d'ordinateur selon la revendication 11.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisibles par un ordinateur selon la revendication 12.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution de l'un des procédés conformes à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
Fig. 1, une architecture d'un réseau de télécommunications dans lequel des procédés de l'invention sont mis en œuvre selon un mode de réalisation de l'invention ;
Fig. 2, un organigramme représentant des étapes d'un procédé de demande de service personnalisé et des étapes d'un procédé permettant une personnalisation de requêtes de service, les procédés étant conformes à l'invention et mis en œuvre selon un premier mode de réalisation ;
Fig. 3, un organigramme représentant des étapes d'un procédé de demande de service personnalisé, le procédé étant conforme à l'invention et mis en œuvre selon un deuxième mode de réalisation ;
Fig. 4, des architectures fonctionnelles d'un terminal conforme à l'invention et d'un système comportant un dispositif de personnalisation de requêtes de service conforme à l'invention ;
Fig. 5, une architecture matérielle d'un terminal selon un mode de réalisation de l'invention ; et
Fig. 6, une architecture matérielle d'un dispositif de personnalisation de requêtes de service selon un mode de réalisation de l'invention.

### Description des modes de réalisation

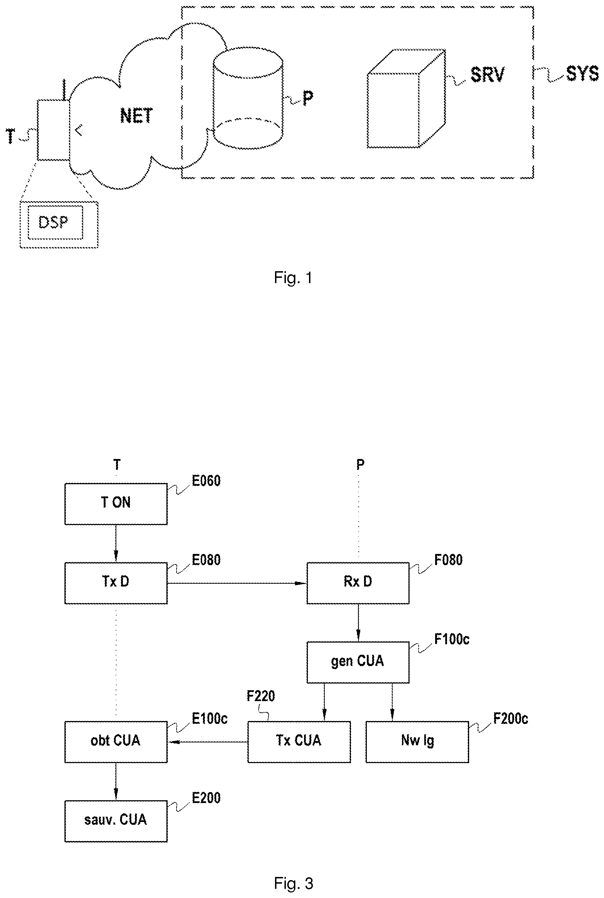

La **figure 1** illustre une architecture d'un réseau de télécommunication NET dans lequel le procédé de demande de service personnalisé et le procédé de personnalisation de requêtes de service, conformes à l'invention, sont mis en œuvre selon un mode de réalisation de l'invention. Aucune limitation n'est imposée quant à la nature du réseau NET. Le réseau NET peut être de type Internet par exemple. Un terminal T et un dispositif P de personnalisation de requêtes de service, conformes à l'invention, sont connectés au réseau NET. Le dispositif de personnalisation de requêtes de service P coopère avec un ou plusieurs dispositifs de fourniture de services SRV co-localisés avec le dispositif de personnalisation P ou distants. Le couple formé par le dispositif de personnalisation de requêtes de service P et un dispositif de fourniture de services SRV lors d'une demande de service personnalisé constitue un système SYS.

Le terminal T peut être un téléphone de type smartphone, une tablette, une montre connectée ou tout autre type de dispositif communicant. Dans cet exemple, le terminal T dispose d'un capteur, le capteur comportant soit une caméra, soit un dispositif permettant de numériser un code, tel qu'un code-barres ou un code-QR, soit un transmetteur, notamment un récepteur NFC.

Ce terminal T comporte un dispositif DSP de demande de service personnalisé.

Le dispositif de fourniture de services SRV peut notamment être constitué par un serveur hébergeant au moins un site web ou une application logicielle fournissant un ou plusieurs services à des clients. Le dispositif de personnalisation P constitue, notamment, un intermédiaire entre le dispositif de fourniture de services SRV et ses clients, comme par exemple l'utilisateur du terminal T.

Eventuellement, le dispositif de personnalisation P est implémenté dans le dispositif de fourniture de service SRV (non illustré). Dans ce cas, le dispositif de personnalisation P du dispositif de fourniture de service SRV fournit une deuxième requête de service en fonction de la première requête de service reçue du terminal de communication T à un ou des serveurs ou à un dispositif de traitement mettant en œuvre un service en fonction de la deuxième requête de service.

Le dispositif de personnalisation P et/ou le dispositif de fourniture de services SRV peuvent être des modules logiciels implémentés sur des dispositifs physiques ayant l'architecture d'un ordinateur. Par exemple, le dispositif de personnalisation P est une plateforme d'intermédiation de services notamment implémenté en langage php et le dispositif de fourniture de services SRV peut être implémenté en langage html.

Alternativement, le dispositif de personnalisation P et/ou le dispositif de fourniture de services SRV peuvent être des dispositifs physiques.

Dans ce mode illustré par la figure 1, le dispositif de personnalisation P est implémenté dans un dispositif séparé du dispositif implémentant le dispositif de fourniture de services SRV. Dans un autre mode, le dispositif de personnalisation P est implémenté dans un même dispositif physique que le dispositif de fourniture de services SRV.

Dans le mode illustré par la figure 1, le dispositif de personnalisation P est dédié pour l'intermédiation des services offerts par le dispositif de fourniture de services SRV. Alternativement, le dispositif de personnalisation P peut être partagé entre plusieurs dispositifs de fourniture de services, y compris le dispositif de fourniture de services SRV, et former un dispositif de personnalisation de des différents services offerts par ces dispositifs de fourniture de services.

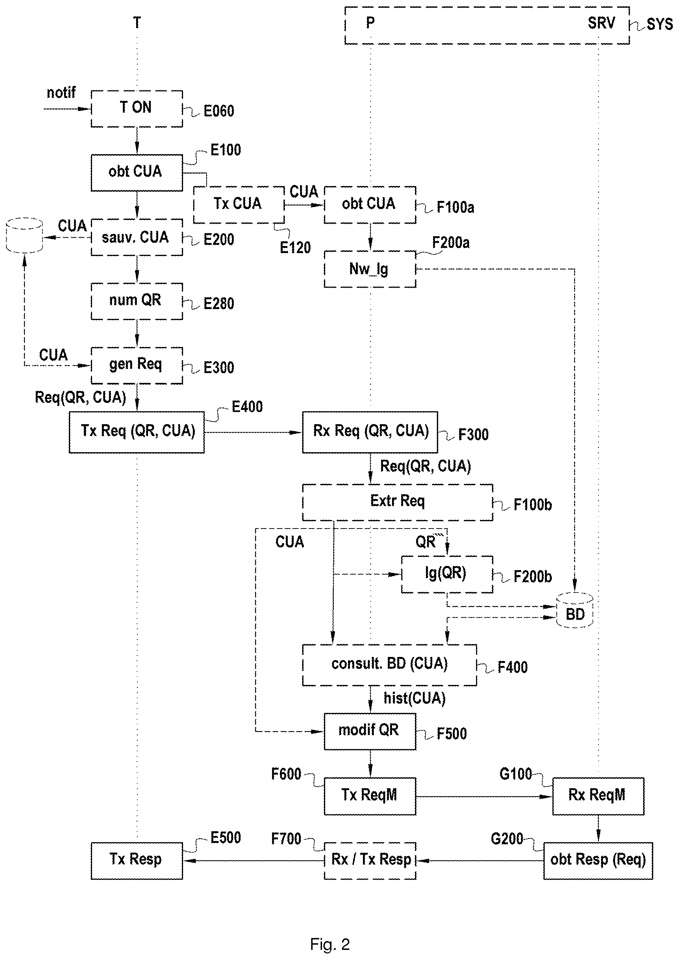

La **figure 2** est un organigramme représentant des étapes du procédé de demande de service personnalisé, et des étapes du procédé de personnalisation de requêtes de service selon un premier mode de réalisation de l'invention, les procédés étant conformes à l'invention.

Le procédé de demande de service personnalisé est mis en œuvre par le terminal T, tandis que le procédé de personnalisation de requêtes de service est mis en œuvre par le dispositif de personnalisation P. En particulier, les étapes Exxx décrites ci-après sont des étapes du procédé de demande de service personnalisé selon l'invention. Les étapes Fxxx décrites ci-après sont des étapes du procédé de personnalisation de requêtes de service selon l'invention.

En particulier, le procédé de demande de service personnalisé conforme à l'invention est exécuté par un programme d'ordinateur PROG1 enregistré dans le terminal T. Dans le mode décrit ici, le programme PROG1 est une application logicielle installée sur le terminal T. En particulier, l'application PROG1 peut être téléchargée à partir de le dispositif de personnalisation P ou à partir d'un autre dispositif géré par une même autorité administrative que le dispositif de personnalisation P.

En particulier, Le terminal T est configuré à travers son application PROG1 pour obtenir une adresse AoC_P du dispositif de personnalisation P pour pouvoir communiquer avec lui.

L'accès au dispositif de demande de service personnalisé du terminal T est déverrouillé par son utilisateur, par exemple par un code PIN ou par l'empreinte digitale de l'utilisateur. Au cours d'une étape E060, le programme PROG1 reçoit une notification notif d'un dispositif de verrouillage et de déverrouillage implémenté dans le terminal, lui notifiant le déverrouillage réussi du dispositif de demande de service personnalisé du terminal T.

Suite au déverrouillage du terminal T et au cours d'une étape E100, le terminal T obtient un identifiant unique anonyme CUA. Cet identifiant permet d'identifier un compte auprès du dispositif de personnalisation P, accessible depuis l'application PROG1 installée sur le terminal T. Ainsi, l'identifiant unique anonyme est associé non pas au terminal T mais à l'utilisateur ayant obtenu, par déverrouillage, l'accès au dispositif DSP de demande de service personnalisé. Sur un terminal multi-utilisateur, cela permet à chaque utilisateur de bénéficier d'un service personnalisé et non pas un service personnalisé pour le terminal.

Dans ce premier mode de réalisation, le terminal T obtient l'identifiant unique anonyme CUA en exécutant une fonction de génération aléatoire. L'identifiant unique anonyme CUA est ainsi généré par le terminal T. Pour garantir l'unicité de l'identifiant généré par le terminal, celui est notamment fonction soit d'une donnée unique fournie par le dispositif de personnalisation P soit de données d'identification propres à l'utilisateur. En particulier, la fonction appliquée sur les données d'identification propres à l'utilisateur pour générer l'identifiant unique anonyme ne permet pas à un tiers de retrouver par fonction inverse ces données d'identification. Ainsi, l'anonymat de l'identifiant unique anonyme est sécurisée.

Dans le mode de réalisation décrit ici, au cours d'une étape E200, le terminal T enregistre l'identifiant unique anonyme CUA dans une mémoire du terminal T. En variante, l'identifiant unique anonyme CUA est régénéré, préférentiellement à l'identique, à chaque déverrouillage ou pour chaque requête de service envoyée par le terminal au dispositif P de personnalisation de requêtes de service.

Au cours d'une étape E120, le terminal T envoie, par exemple via son application PROG1, l'identifiant unique anonyme CUA au dispositif de personnalisation P. Notamment, le terminal T connait l'adresse du dispositif de personnalisation P grâce à la configuration de l'application PROG1. Le terminal T n'envoie au dispositif de personnalisation P ni une adresse mail, ni un numéro de téléphone, ni une autre information personnelle permettant d'identifier l'utilisateur du terminal T. L'identifiant unique anonyme CUA garantit l'anonymat de l'utilisateur à l'origine de la demande de service.

Aau cours d'une étape F100a du procédé de personnalisation de requêtes de service, le dispositif de personnalisation P obtient l'identifiant unique anonyme CUA en le recevant du terminal T. Le dispositif de personnalisation P crée, en association avec l'identifiant unique anonyme CUA, dans sa mémoire, par exemple dans une base de données BD, au cours d'une étape F200a, un journal Nw_lg pour mémoriser des traces des demandes de services associées à cet identifiant unique anonyme CUA. Ce journal peut être par exemple sous la forme d'un historique ou d'un log des demande de services associées à l'identifiant unique anonyme CUA.

En particulier, dans ce mode de réalisation, le dispositif de personnalisation P implémente un gestionnaire de relation client ou exécute un logiciel de gestion d'une relation client. Le dispositif de personnalisation P enregistre dans sa mémoire, par exemple dans la base de données BD, les identifiants uniques de plusieurs comptes correspondant à des comptes d'utilisateurs de services fournis par le dispositif de fourniture de services SRV. L'identité des utilisateurs n'est connue ni par le dispositif de personnalisation P, ni par le dispositif de fourniture de services SRV.

Au cours d'une étape E280 du procédé de demande de service personnalisé selon l'invention, le terminal T capture un code, par exemple de type « QR code » par numérisation, lecture, photographie, etc. Ce code peut fournir une requête dite initiale QR pour accéder, à une page web hébergée par le dispositif de fourniture de services SRV. La première requête au sens de l'invention peut comporter cette requête initiale QR.

Ainsi, en particulier, au cours d'une étape E300, le terminal T, et plus précisément le dispositif de demande de service personnalisé du terminal T, génère la première requête Req comportant la requête initiale QR , cette première requête étant associée avec l'identifiant unique anonyme CUA lu dans la mémoire du terminal T. Dans un mode de réalisation, la première requête Req comporte l'identifiant unique anonyme CUA. Dans un autre mode de réalisation, la première requête Req est envoyée avec l'identifiant unique anonyme CUA dans un même paquet de données vers le dispositif de personnalisation P, la première requête Req indiquant que la requête initiale QR est à personnaliser. En particulier, le terminal T peut, au cours de l'étape E300 de génération de la première requête Req, soit enrichir la requête initiale QR par d'autres informations, soit générer une première requête Req en y intégrant la requête initiale QR et éventuellement par d'autres informations, tels qu'une information de localisation GPS du terminal T ; une telle information permet au dispositif de personnalisation P d'identifier la position géographique du code capturé.

En particulier, le terminal T envoie la première requête Req au dispositif de personnalisation P au cours d'une étape E400. En effet, le dispositif de personnalisation P est un dispositif intermédiaire entre le terminal T et le dispositif de fourniture de services SRV, permettant au terminal T de recevoir en particulier la page web correspondante au code capturé.

En particulier, au cours d'une étape F300 du procédé de personnalisation de requête de service, le dispositif de personnalisation P reçoit la première requête Req et extrait de cette première requête Req l'identifiant unique anonyme CUA et la requête initiale QR, notamment sous la forme d'un lien de la page web correspondant au code capturé.

En particulier, le dispositif de personnalisation P enregistre, dans sa mémoire, par exemple dans la base de données BD indexée par des identifiants uniques anonymes, l'identifiant CUA. Dans le mode de réalisation décrit ici, cette base de données BD comporte des informations sur les historiques de services fournis par le dispositif de fourniture de services SRV, par exemple l'historique des services demandés par le terminal T (notamment, via son dispositif DSP de demande de services personnalisés, ou via son application PROG1 au dispositif de fourniture de services SRV). A titre d'exemple, lorsque le dispositif de fourniture de services SRV héberge un site web d'un commerçant, la base de données BD peut comporter un historique d'achats effectués par le compte du terminal T auprès de ce site web, ou un historique de pages web de ce site consultées par le compte du terminal T. Dans un autre exemple, la base de données enregistre le nombre de requêtes comportant l'identifiant unique anonyme CUA qu'elle a reçues pour se connecter au dispositif de fourniture de services SRV.

Dans le mode décrit ici, la base de données BD est enregistrée dans une mémoire du dispositif de personnalisation P. Alternativement, la base de données BD peut être enregistrée dans un dispositif distinct du dispositif de personnalisation P mais accessible par le dispositif de personnalisation P.

En particulier, sur la base de l'identifiant obtenu CUA, le dispositif de personnalisation P consulte au cours d'une étape F400 la base de données BD. Le dispositif de personnalisation P peut mettre à jour, au cours d'une étape F200b, la base de données BD en fonction du contenu de la requête Req, par exemple en enregistrant le contenu de la requête Req en association avec l'identifiant CUA, ou en incrémentant un compteur de nombre d'accès à un même service que celui désigné par la requête Req, ou en enregistrant l'information sur la localisation GPS du terminal T. Le dispositif de personnalisation P enregistre ainsi, dans un champ de la base de données BD, une information relative au service fourni par le dispositif de fourniture de services SRV.

Au cours d'une étape F500, le dispositif de personnalisation P modifie la première requête Req en fonction d'un résultat hist(CUA) de la consultation de la base de données BD, par exemple en spécifiant le nombre de consultations de la page web QR rattachée au code capturé, ou en spécifiant la localisation GPS du terminal T. Le dispositif de personnalisation P obtient alors une deuxième requête ReqM, à partir de la première requête Req. Ainsi, pour obtenir du dispositif de fourniture de service SRV un service personnalisé, le dispositif de fourniture de service SRV n'a pas besoin de savoir que la demande de service provient d'un même utilisateur (même s'il est anonyme).

En particulier, la deuxième requête ReqM ne comporte pas l'identifiant unique anonyme. L'anonymat de l'utilisateur est alors doublement garanti puisque non seulement le dispositif de fourniture de service n'a pas accès à l'identité de l'utilisateur mais il n'a pas non plus accès à toutes les habitudes de demandes de services de l'utilisateur mais seulement à celles utiles à la personnalisation du service.

En particulier, au cours d'une étape F600, le dispositif de personnalisation P envoie la deuxième requête ReqM au dispositif de fourniture de services SRV.

Le dispositif de fourniture de services SRV reçoit la requête ReqM au cours d'une étape G100.

Au cours d'une étape G200, le dispositif de fourniture de services SRV obtient des données Resp en fonction de la requête ReqM et en particulier en fonction de traces liées à l'identifiant unique anonyme, ces données Resp étant personnalisées suivant les traces fournies hist(CUA).

Par exemple, les données personnalisées peuvent être une page web déterminée en fonction d'une information QR comprise dans le code capturé (E280) et de la localisation GPS du terminal T, telle qu'une page web relative aux musées de Paris, lorsque l'information QR comprise dans le code correspond à un site web décrivant les musées de France et lorsque la localisation GPS du terminal T correspond à Paris.

Selon un autre exemple, les données personnalisées peuvent être une page web déterminée en fonction d'un historique d'achats associé à l'identifiant unique anonyme CUA et d'un lien QR vers un site commerçant compris dans le code capturé (E300).

En particulier, au cours de l'étape G200, le dispositif de fourniture de services SRV envoie les données personnalisées Resp au dispositif de personnalisation P en réponse à la requête ReqM.

En particulier, au cours d'une étape F700, le dispositif de personnalisation P reçoit les données personnalisées Resp et les transmet au terminal T.

Le terminal T reçoit le service personnalisé Resp, notamment sous la forme de données personnalisées, au cours d'une étape E500. Ainsi, le dispositif de personnalisation P a permis au terminal T d'accéder au service offert par le dispositif de fourniture de services SRV, de façon personnalisée et anonyme sans dévoiler aucun identifiant de l'utilisateur du terminal T. En envoyant les données personnalisées, le dispositif de fourniture de services SRV fournit un service personnalisé pour le compte identifié au niveau du dispositif de personnalisation P par l'identifiant unique anonyme CUA.

A chaque fois où le terminal T envoie une requête au dispositif de personnalisation P, il y insère l'identifiant unique anonyme CUA pour permettre au dispositif de personnalisation P de repérer le même compte, de personnaliser la requête de service transmise au dispositif de fourniture de services SRV, et de retourner des données personnalisées pour ce compte au terminal T.

Nous notons que l'identifiant unique anonyme CUA identifie le compte auprès du dispositif de personnalisation, pour le terminal T, et non pas l'utilisateur du terminal T. Pour cette raison, dans le mode décrit en référence à la figure 2, l'identifiant unique anonyme CUA est généré (E100) par le terminal T sur réception (E060) d'une notification correspondante à un déverrouillage réussi par le terminal T du dispositif de demande de personnalisation pour garantir l'unicité de l'identifiant par utilisateur.

Pour une meilleure sécurité, l'application PROG1 n'est exécutée que sur détection d'une notification relative à un déverrouillage réussi du dispositif de demande de service personnalisé, pour l'obtention (E100) de l'identifiant unique anonyme CUA.

Dans une variante du premier mode décrit en référence à la figure 2, lorsque le terminal T obtient (E100) l'identifiant CUA, il ne le transmet pas directement au dispositif de personnalisation P. L'étape E120 décrite précédemment, et à fortiori les étapes F100a et F200a ne sont pas mises en œuvre.

Selon cette deuxième variante, le terminal T n'envoie l'identifiant unique anonyme CUA au dispositif de personnalisation P que dans le cadre d'un envoi (E400) d'une requête. Supposons que la requête Req est la première requête que le terminal T envoie (E400) à le dispositif de personnalisation P, lorsque le dispositif de personnalisation P reçoit (F300) cette première requête Req, elle en extrait (F100b) l'identifiant CUA. Le dispositif de personnalisation P obtient alors, pour la première fois et au cours d'une étape F100a, l'identifiant unique anonyme CUA, et l'enregistre dans sa mémoire au cours de l'étape F200b.

En particulier, le procédé de personnalisation extrait (F100b) de la première requête Req reçue (F300) du terminal T la requête initiale QR et l'identifiant unique anonyme CUA associé.

En particulier, le procédé de personnalisation utilise ces deux éléments extraits de la première requête Req (la requête initiale QR et l'identifiant unique anonyme CUA) pour enregistrer (F200b) la requête initiale ou des éléments en fonction de la requête initiale QR dans une mémoire du dispositif de personnalisation en association avec l'identifiant unique anonyme permettant ainsi de générer et/ou d'alimenter des traces des demandes de services personnalisés associées à l'identifiant unique anonyme CUA. Notamment, l'enregistrement de traces Ig(QR) (F200b) est effectué dans une base de données BD indexée par les identifiants uniques anonymes des utilisateurs utilisant le dispositif de personnalisation de requête de service P.

En particulier, la modification de requête modifQR (F500) modifie ou enrichit la requête initiale QR extraite (F100b) en fonction des résultats de la consultation F400 en fonction de l'identifiant unique anonyme CUA des traces préalablement enregistrées dans la mémoire du dispositif de personnalisation de requête de service P, en particulier dans la base de données indexée BD.

Dans un mode de réalisation, la deuxième requête ReqM est identique à la première requête Req. Notamment, la deuxième requête ReqM est identique à la première requête Req lors d'une première demande de service personnalisé par un utilisateur puisque le dispositif de personnalisation ne dispose d'aucune donnée personnelle sur l'utilisateur, car il n'a pas encore enregistré d'historique de demande de services.

En particulier, suivant la demande de service, l'utilisateur peut souhaiter transmettre de manière exceptionnelle des données d'identification au dispositif de fourniture de service, tel que l'adresse postale dans le cas d'achat d'objet physique, l'adresse email dans le cas d'achat de contenu, etc. Dans ces cas, le procédé de demande de service personnalisé selon l'invention comporte en outre une levée de l'anonymat d'un utilisateur du terminal (non illustré) sur réception d'une demande explicite de cet utilisateur.

Par exemple, le terminal vérifie si son utilisateur souhaite demander un service personnalisé de façon anonyme ou pas, notamment en fonction du type de service demandé. Si le terminal vérifie que l'utilisateur souhaite divulguer l'un de ses identifiants, comme son adresse mail ou son numéro de téléphone, alors le terminal effectue une levée de l'anonymat, par exemple en envoyant un identifiant de l'utilisateur au dispositif de personnalisation P.

La **figure 3** est un organigramme représentant des étapes du procédé de demande de service personnalisé et des étapes du procédé de personnalisation de requêtes de service selon un deuxième mode de réalisation de l'invention, les procédés étant conformes à l'invention. En particulier, les étapes E060, E080, E100c et E200 décrites ci-après sont des étapes du procédé de demande de service personnalisé selon l'invention, mises en œuvre par le terminal T. Les étapes F080, F100c, F200c et F220 décrites ci-après sont des étapes du procédé permettant de personnalisation de requêtes de service selon l'invention, mises en œuvre par le dispositif de personnalisation P.

Ce deuxième mode diffère du premier mode décrit en référence à la figure 2 dans la façon d'obtenir le code unique et anonyme CUA.

Au cours d'une étape E060, similaire à l'étape E060 décrite en référence à la figure 2, le terminal T et en particulier son application PROG1 obtient une information indiquant un déverrouillage réussi du terminal T.

Au cours d'une étape E080, le terminal T envoie à le dispositif de personnalisation P une demande D d'un identifiant unique anonyme.

Le dispositif de personnalisation P reçoit la demande D au cours d'une étape F080.

Dans ce deuxième mode, le dispositif de personnalisation P obtient l'identifiant unique anonyme CUA au cours d'une étape F100c en le générant, par exemple en exécutant une fonction de génération aléatoire.

Au cours d'une étape F200c, le dispositif de personnalisation P crée pour l'identifiant unique anonyme CUA dans sa mémoire un espace de gestion des traces de demandes de services provenant de cet identifiant unique anonyme, notamment en indexant une partie d'une base de données au moyen de l'identifiant unique anonyme généré CUA.

En parallèle et au cours d'une étape F220, le dispositif de personnalisation P envoie l'identifiant unique anonyme CUA au terminal T en réponse à sa demande D.

Le terminal T reçoit l'identifiant unique anonyme CUA au cours d'une étape E100c et l'enregistre dans sa mémoire au cours d'une étape E200, similaire à l'étape E200 décrite en référence à la figure 2.

Les procédés de l'invention, selon ce deuxième mode, comportent en outre des étapes identiques aux étapes E280, E300, E400 et E500 du procédé de demande de service personnalisé et aux étapes F300, F400, F500, F600 et F700 du procédé de personnalisation de requêtes de service, ces étapes étant déjà décrites en référence à la figure 2.

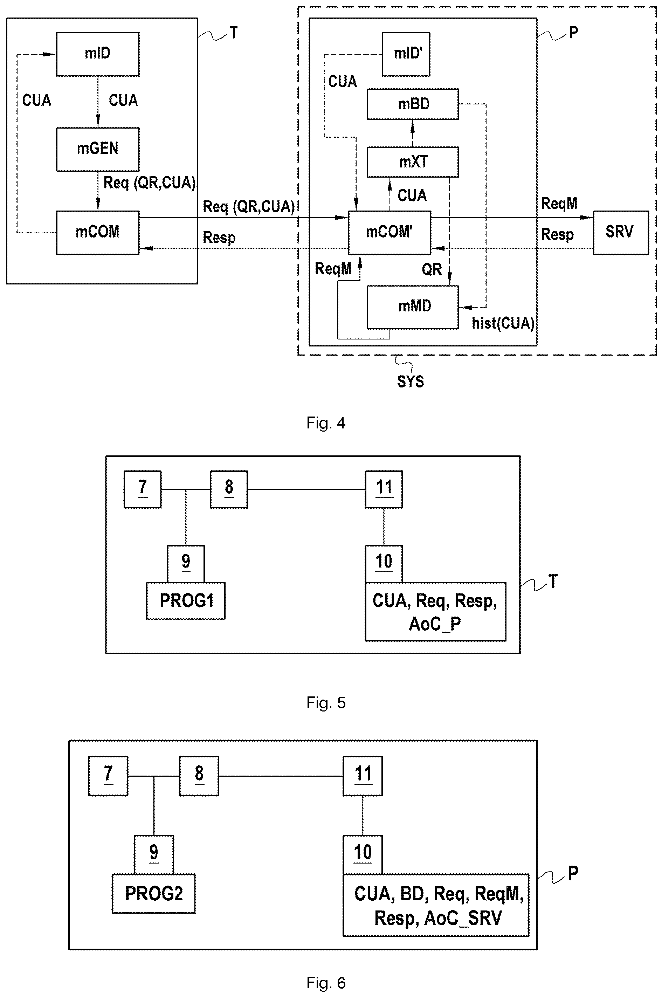

La **figure 4** représente des architectures fonctionnelles, selon un mode de réalisation de l'invention, du terminal T, du dispositif de personnalisation P et du dispositif de fourniture de services SRV, le terminal T, le dispositif de personnalisation et le dispositif de fourniture de services étant conformes à l'invention. Eventuellement, le dispositif de personnalisation P et le dispositif de fourniture de services SRV constituent un système de fourniture de service personnalisé SYS.

Le système SYS, comportant le dispositif P de personnalisation et le dispositif de fourniture de services SRV, permet de fournir au terminal T, un service du dispositif de fourniture de services SRV, personnalisé pour un compte identifié par le dispositif de personnalisation de requête de service P au moyen de l'identifiant CUA.

Le terminal T est configuré pour demander un service personnalisé fourni par le dispositif de fourniture de services SRV. Le terminal T comporte:
- un obtenteur d'identification (mID) configuré pour obtenir, suite à un déverrouillage (E060) d'un accès à un dispositif de demande de service personnalisé implémenté dans le terminal (T), un identifiant (CUA) unique anonyme, apte à être transmis, par ledit terminal (T), en association avec une requête de service, à un dispositif (P) de personnalisation de requête de service, la requête de service étant destinée au dispositif (SRV) de fourniture du service

En particulier, le terminal T comporte en outre :
- une mémoire configurée pour enregistrer (E200) l'identifiant unique anonyme CUA.

En particulier, le terminal comporte en outre :
- un générateur mGEN de requêtes configuré pour générer (E300) la première requête Req en association avec l'identifiant unique anonyme CUA pour accéder audit service.

Notamment, la première requête Req est constituée à partir d'une requête initiale QR impersonnelle. La requête initiale est, par exemple, fournie par un dispositif de lecture de code, tel qu'un lecteur de code-QR ou de code NFC, etc.

Le lecteur de code est, par exemple, implémenté dans le terminal T ou connecté au terminal T. Ainsi, le terminal T reçoit du lecteur de code la requête initiale QR. Le lecteur de code comporte par exemple un capteur, tel qu'une caméra, un scanner, etc. ou un récepteur radio tel qu'un récepteur NFC permet soit de lire ou recevoir directement la requête initiale QR dans le code soit de déclencher avec la lecture du code une recherche de données associées au code comportant la requête initiale QR. Notamment, le lecteur de code comporte une commande de recherche dans une base de données de codes distants des données associées. Ainsi, par exemple, l'utilisateur photographie ou lie au moyen d'une caméra du terminal T un code-QR ou un code-barres sur un panneau publicitaire ou un panneau d'information. Soit le lecteur comporte un décodeur et/ou un extracteur permettant d'extraire du code la requête initiale QR, soit le lecteur utilise le code (éventuellement décodé) pour chercher dans une base de codes distants des données associées au code lu et recevoir de cette base de codes distantes la requête initiale QR permettant une demande de service rapide.

En particulier, le terminal T comporte
- un transmetteur mCOM configuré pour envoyer (E400) la première requête Req au dispositif de personnalisation P.

Le terminal T n'envoie aucun identifiant de l'utilisateur du terminal T au dispositif de personnalisation P.

Le dispositif de personnalisation de requêtes de service est, notamment, placé entre un dispositif de demande de service personnalisé implémenté dans un terminal de communication (T) et un dispositif de fourniture de service. II comporte :
- un transmetteur (mCOM') configuré pour recevoir une première requête (Req) de service associée avec un identifiant unique anonyme (CUA) provenant du terminal de communication (T), ledit identifiant unique anonyme (CUA) ayant été obtenu suite à un déverrouillage (E060) d'un accès audit dispositif de demande de service personnalisé, la première requête (Req) de service permettant au dispositif (P) de personnalisation de requête de service de générer une deuxième requête (ReqM) à partir de ladite première requête (Req) de service, ladite deuxième requête (ReqM) étant personnalisée en fonction de données préalablement enregistrées par le dispositif de personnalisation de requête de service en association avec ledit identifiant unique anonyme (CUA).

Le dispositif de personnalisation P permet une personnalisation d'au moins un service, y compris le service fourni par le dispositif de fourniture de services SRV.

En particulier, le dispositif de personnalisation P comporte :
- un obtenteur mID' (F100a, F100b, F100c) de l'identifiant unique anonyme CUA d'un compte auprès du dispositif de personnalisation, cet identifiant n'identifiant pas un utilisateur d'un terminal ;

En particulier, le dispositif de personnalisation P comporte :
- une mémoire configurée pour enregistrer (F200a, F200b, F200c) des traces de demandes de service en association avec l'identifiant unique anonyme CUA;

En particulier, le dispositif de personnalisation P comporte :
- un transmetteur mCOM' configuré pour recevoir la première requête Req comportant l'identifiant unique anonyme CUA ; ce transmetteur étant configuré pour envoyer au dispositif de fourniture de services SRV la deuxième requête ReqM, cette deuxième requête ReqM étant obtenue à partir de la première requête Req de demandes de services préalables associées à l'identifiant unique anonyme CUA.

En particulier, le dispositif de personnalisation P comporte :
- un extracteur configuré pour extraire de la première requête Req, la requête initiale QR et l'identifiant unique anonyme associée CUA.

En particulier, le dispositif de personnalisation P comporte :
- un gestionnaire d'accès mBD, configuré pour enregistrer, dans un champ de la base de données BD indexée par des dits identifiants uniques, une information relative auxdites demandes de services (des traces des demandes de service).

En particulier, le dispositif de personnalisation P comporte :
- un gestionnaire d'accès mBD, configuré pour consulter, notamment dans un champ de la base de données BD indexée par des dits identifiants uniques, des informations relatives auxdites demandes de services (des traces des demandes de service) associées à l'identifiant unique anonyme reçu dans la première requête Req.

Le dispositif de fourniture de services SRV fournit (G200) un service personnalisé pour le compte en fonction de l'identifiant CUA.

Dans le mode de réalisation décrit ici, le terminal T a l'architecture matérielle d'un ordinateur, telle qu'illustrée à la **figure 5****.**

L'architecture du terminal T comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du terminal T selon l'invention constitue un support d'enregistrement conforme à l'invention, lisible par le processeur 7 et sur lequel est enregistré ici un programme d'ordinateur PROG1 conforme à l'invention.

La mémoire 10 du terminal T permet d'enregistrer des variables utilisées pour l'exécution des étapes du procédé de demande de service personnalisé selon l'invention, telles que l'identifiant unique anonyme CUA, la requête Req, les données personnalisées Resp, et une adresse AoC_P de contact de le dispositif de personnalisation P.

Le programme d'ordinateur PROG1 définit des modules fonctionnels et logiciels ici, configurés pour accéder anonymement à un service. Ces modules fonctionnels s'appuient sur et/ou commandent les éléments matériels 7-11 du terminal T cités précédemment.

Le terminal T peut aussi mettre en œuvre le procédé d'accès un service conforme à l'invention, lorsqu'il est configuré pour lever l'anonymat sur réception d'une demande explicite de l'utilisateur du terminal T.

Dans ce cas, La mémoire morte 9 du terminal T selon l'invention constitue un support d'enregistrement conforme à l'invention, lisible par le processeur 7 et sur lequel est enregistré un programme d'ordinateur PROG1 conforme à l'invention. Le programme d'ordinateur PROG1 définit des modules fonctionnels et logiciels ici, configurés pour accéder à un service. Ces modules fonctionnels s'appuient sur et/ou commandent les éléments matériels 7-11 du terminal T cités précédemment.

Dans le mode de réalisation décrit ici, le dispositif de personnalisation P a l'architecture matérielle d'un ordinateur, telle qu'illustrée à la **figure 6****.**

L'architecture de le dispositif de personnalisation P comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 de le dispositif de personnalisation P selon l'invention constitue un support d'enregistrement conforme à l'invention, lisible par le processeur 7 et sur lequel est enregistré ici un programme d'ordinateur PROG2 conforme à l'invention.

La mémoire 10 de le dispositif de personnalisation P permet d'enregistrer des variables utilisées pour l'exécution des étapes du procédé permettant une demande de service personnalisé à au moins un service, selon l'invention, telles que l'identifiant unique anonyme CUA, la requête Req, les données personnalisées Resp, la base de données BD ou une adresse pour accéder à cette base de données, et une adresse AoC_SRV de contact du dispositif de fourniture de services SRV.

Le programme d'ordinateur PROG2 définit des modules fonctionnels et logiciels ici, configurés pour permettre un accès anonyme à au moins un service. Ces modules fonctionnels s'appuient sur et/ou commandent les éléments matériels 7-11 de le dispositif de personnalisation P cités précédemment.

## Revendications

1. Procédé de demande de service personnalisé par un terminal de communication (T), ledit procédé comportant, suite à un déverrouillage (E060) d'un accès à un dispositif de demande de service personnalisé, ledit dispositif étant implémenté dans le terminal de communication :
- une obtention (E100, E100c) d'un identifiant (CUA) unique anonyme, apte à être transmis, par ledit terminal (T), en association avec une requête de service, à un dispositif (P) de personnalisation de requêtes de service, la requête de service étant destinée à un dispositif (SRV) de fourniture du service.

2. Procédé selon la revendication 1 dans lequel l'obtention de l'identifiant (CUA) comporte une des étapes suivantes :
- une génération de l'identifiant unique anonyme (CUA),
- une réception de l'identifiant unique anonyme (CUA) d'un générateur d'identifiant unique anonyme implémenté dans un équipement d'un réseau de communication distinct du dispositif (SRV) de fourniture de service.

3. Procédé selon l'une quelconque des revendications 1 ou 2, le procédé comportant :
- un envoi (E400) d'une requête (Req) de service associée à l'identifiant unique anonyme (CUA) à destination du dispositif (SRV) de fourniture du service ; et
- suite à cet envoi, une réception (E500) d'une réponse personnalisée (Resp) provenant du dispositif (SRV) de fourniture de service, la réponse personnalisée (Resp) résultant d'un traitement (G200) mis en œuvre par le dispositif (SRV) de fourniture de service en fonction d'une requête (ReqM) modifiée reçue du dispositif (P) de personnalisation de requêtes de service, la requête (ReqM) modifiée ayant été générée (F500) par le dispositif (P) de personnalisation de requêtes de service à partir de la requête (Req) de service envoyée et de l'identifiant unique anonyme (CUA) associé.

4. Procédé selon l'une quelconque des revendications 1 à 3 comportant en outre une capture (E280) de données relatif audit service, la capture de données déclenchant l'envoi de ladite requête (Req) de service.

5. Procédé selon la revendication 4 dans lequel les données sont obtenues à partir d'un code de type QR code ou de type NFC tag.

6. Procédé selon l'une quelconque des revendications 1 à 5 comportant en outre un envoi, au dispositif (SRV) de fourniture de service, d'une information de localisation dudit terminal (T).

7. Procédé de personnalisation de requêtes de service par un dispositif (P) de personnalisation de requêtes de service, ledit procédé comportant :
- une réception (F300) d'une première requête (Req) de service associée avec un identifiant unique anonyme (CUA) provenant d'un terminal de communication (T), la première requête (Req) de service permettant au dispositif (P) de personnalisation de requêtes de service de générer une deuxième requête (ReqM) à partir de ladite première requête (Req) de service, ladite deuxième requête (ReqM) étant personnalisée en fonction de données préalablement enregistrées par le dispositif de personnalisation de requêtes de service en association avec ledit identifiant unique anonyme (CUA).

8. Procédé selon la revendication 7 comportant un envoi (F600) de ladite deuxième requête (ReqM) audit dispositif (SRV) de fourniture de service.

9. Procédé selon la revendication 7 ou 8 comportant un enregistrement dans une base de données (BD) d'une information relative à la première requête indexée par l'identifiant unique anonyme.

10. Procédé selon la revendication 9 comportant une consultation de ladite base de données (BD), ladite deuxième requête étant obtenue par modification (F500) de la première requête en fonction d'un résultat de ladite consultation.

11. Programme d'ordinateur (PROG1, PROG1b, PROG2) comportant des instructions pour l'exécution des étapes d'un procédé de demande de service personnalisé selon l'une quelconque des revendications 1 à 6, ou des étapes d'un procédé de personnalisation de requêtes de service selon l'une des revendications 7 à 10.

12. Support d'enregistrement lisible par un ordinateur sur lequel est enregistré un programme d'ordinateur selon la revendication 11.

13. Terminal de communication (T) configuré pour demander un service personnalisé et **caractérisé en ce qu'**il comporte:
- un obtenteur d'identification (mID) configuré pour obtenir, suite à un déverrouillage (E060) d'un accès à un dispositif de demande de service personnalisé implémenté dans le terminal (T), un identifiant (CUA) unique anonyme, apte à être transmis, par ledit terminal (T), en association avec une requête de service, à un dispositif (P) de personnalisation de requêtes de service, la requête de service étant destinée à un dispositif (SRV) de fourniture du service.

14. Dispositif (P) de personnalisation de requêtes de service, comportant :
- un transmetteur (mCOM') configuré pour recevoir une première requête (Req) de service associée avec un identifiant unique anonyme (CUA) provenant d'un terminal de communication (T), la première requête (Req) de service permettant au dispositif (P) de personnalisation de requêtes de service de générer une deuxième requête (ReqM) à partir de ladite première requête (Req) de service, ladite deuxième requête (ReqM) étant personnalisée en fonction de données préalablement enregistrées par le dispositif de personnalisation de requêtes de service en association avec ledit identifiant unique anonyme (CUA).

## Patentansprüche

1. Verfahren zum Anfordern eines personalisierten Dienstes durch ein Kommunikationsendgerät (T), das Verfahren umfassend, nach einem Entsperren (E060) eines Zugangs zu einer Vorrichtung zum Anfordern eines personalisierten Dienstes, wobei die Vorrichtung in das Kommunikationsendgerät implementiert ist:
- ein Erhalten (E100, E100c) einer anonymen eindeutigen Kennung (CUA), die geeignet ist, von dem Endgerät (T) in Verbindung mit einer Dienstanforderung an eine Vorrichtung (P) zur Personalisierung von Dienstanforderungen übertragen zu werden, wobei die Dienstanforderung für eine Dienstbereitstellungsvorrichtung (SRV) bestimmt ist.

2. Verfahren nach Anspruch 1, wobei das Erhalten der Kennung (CUA) einen der folgenden Schritte umfasst:
- ein Erzeugen der anonymen eindeutigen Kennung (CUA),
- ein Empfangen der anonymen eindeutigen Kennung (CUA) von einem Generator einer anonymen eindeutigen Kennung, der in eine Einrichtung eines Kommunikationsnetzes implementiert ist, die verschieden von der Dienstbereitstellungsvorrichtung (SRV) ist.

3. Verfahren nach einem der Ansprüche 1 oder 2, das Verfahren umfassend:
- ein Senden (E400) einer Dienstanforderung (Req), die der anonymen eindeutigen Kennung (CUA) zugeordnet ist, an die Dienstbereitstellungsvorrichtung (SRV); und
- nach diesem Senden, ein Empfangen (E500) einer personalisierten Antwort (Resp) von der Dienstbereitstellungsvorrichtung (SRV), wobei die personalisierte Antwort (Resp) aus einer Verarbeitung (G200) resultiert, die von der Dienstbereitstellungsvorrichtung (SRV) in Abhängigkeit von einer geänderten Anforderung (ReqM) durchgeführt wird, die von der Vorrichtung (P) zur Personalisierung von Dienstanforderungen empfangen wird, wobei die geänderte Anforderung (ReqM) von der Vorrichtung (P) zur Personalisierung von Dienstanforderungen ausgehend von der gesendeten Dienstanforderung (Req) und von der zugeordneten anonymen eindeutigen Kennung (CUA) erzeugt worden ist (F500).

4. Verfahren nach einem der Ansprüche 1 bis 3, umfassend ferner ein Erfassen (E280) von Daten bezüglich des Dienstes, wobei das Erfassen von Daten das Senden der Dienstanforderung (Req) auslöst.

5. Verfahren nach Anspruch 4, wobei die Daten ausgehend von einem Code vom Typ QR-Code oder vom Typ NFC-Tag erhalten werden.

6. Verfahren nach einem der Ansprüche 1 bis 5, umfassend ferner ein Senden einer Standortinformation des Endgeräts (T) an die Dienstbereitstellungsvorrichtung (SRV).

7. Verfahren zur Personalisierung von Dienstanforderungen durch eine Vorrichtung (P) zur Personalisierung von Dienstanforderungen, das Verfahren umfassend:
- ein Empfangen (F300) einer ersten Dienstanforderung (Req), die einer anonymen eindeutigen Kennung (CUA) zugeordnet ist und von einem Kommunikationsendgerät (T) kommt, wobei die erste Dienstanforderung (Req) es der Vorrichtung (P) zur Personalisierung von Dienstanforderungen ermöglicht, eine zweite Anforderung (ReqM) ausgehend von der ersten Dienstanforderung (Req) zu erzeugen, wobei die zweite Anforderung (ReqM) in Abhängigkeit von Daten personalisiert wird, die zuvor von der Vorrichtung zur Personalisierung von Dienstanforderungen in Verbindung mit der anonymen eindeutigen Kennung (CUA) gespeichert wurden.

8. Verfahren nach Anspruch 7, umfassend ein Senden (F600) der zweiten Anforderung (ReqM) an die Dienstbereitstellungsvorrichtung (SRV).

9. Verfahren nach Anspruch 7 oder 8, umfassend ein Speichern einer Information bezüglich der ersten Anforderung, die durch die anonyme eindeutige Kennung indiziert ist, in einer Datenbank (BD).

10. Verfahren nach Anspruch 9, umfassend ein Abfragen der Datenbank (BD), wobei die zweite Anforderung durch Ändern (F500) der ersten Anforderung in Abhängigkeit von einem Ergebnis der Abfrage erhalten wird.

11. Computerprogramm (PROG1, PROG1b, PROG2), das Anweisungen zum Ausführen der Schritte eines Verfahrens zum Anfordern eines personalisierten Dienstes nach einem der Ansprüche 1 bis 6 oder der Schritte eines Verfahrens zur Personalisierung von Dienstanforderungen nach einem der Ansprüche 7 bis 10 umfasst.

12. Computerlesbares Speichermedium, auf dem ein Computerprogramm nach Anspruch 11 gespeichert ist.

13. Kommunikationsendgerät (T), das dazu ausgelegt ist, einen personalisierten Dienst anzufordern, und **dadurch gekennzeichnet ist, dass** es umfasst:
- einen Identifikationserhalter (MID), der dazu ausgelegt ist, nach einem Entsperren (E060) eines Zugangs zu einer Vorrichtung zum Anfordern eines personalisierten Dienstes, die in das Endgerät (T) implementiert ist, eine anonyme eindeutige Kennung (CUA) zu erhalten, die geeignet ist, von dem Endgerät (T) in Verbindung mit einer Dienstanforderung an eine Vorrichtung (P) zur Personalisierung von Dienstanforderungen übertragen zu werden, wobei die Dienstanforderung für eine Dienstbereitstellungsvorrichtung (SRV) bestimmt ist.

14. Vorrichtung (P) zur Personalisierung von Dienstanforderungen, umfassend:
- einen Sender (mCOM'), der dazu ausgelegt ist, eine erste Dienstanforderung (Req) zu empfangen, die einer anonymen eindeutigen Kennung (CUA) zugeordnet ist und von einem Kommunikationsendgerät (T) kommt, wobei die erste Dienstanforderung (Req) es der Vorrichtung (P) zur Personalisierung von Dienstanforderungen ermöglicht, eine zweite Anforderung (ReqM) ausgehend von der ersten Dienstanforderung (Req) zu erzeugen, wobei die zweite Anforderung (ReqM) in Abhängigkeit von Daten personalisiert wird, die zuvor von der Vorrichtung zur Personalisierung von Dienstanforderungen in Verbindung mit der anonymen eindeutigen Kennung (CUA) gespeichert wurden.

## Claims

1. Method for requesting a personalized service by a communication terminal (T), said method comprising, following an unlocking (E060) of an access to a personalized service request device, said device being implemented in the communication terminal:
- obtaining (E100, E100c) an anonymous unique identifier (CUA), capable of being transmitted by said terminal (T), in association with a service request, to a service request personalization device (P), the service request being intended for a service provision device (SRV) .

2. Method according to Claim 1, wherein obtaining the identifier (CUA) comprises one of the following steps:
- generating the anonymous unique identifier (CUA),
- receiving the anonymous unique identifier (CUA) from an anonymous unique identifier generator implemented in an equipment of a communication network distinct from the service provision device (SRV).

3. Method according to either one of Claims 1 and 2, the method comprising:
- sending (E400) a service request (Req) associated with the anonymous unique identifier (CUA) to the service provision device (SRV); and
- following this sending, receiving (E500) a personalized response (Resp) from the service provision device (SRV), the personalized response (Resp) resulting from processing (G200) implemented by the service provision device (SRV) based on a modified request (ReqM) received from the service request personalization device (P), the modified request (ReqM) having been generated (F500) by the service request personalization device (P) on the basis of the sent service request (Req) and of the associated anonymous unique identifier (CUA).

4. Method according to any one of Claims 1 to 3, furthermore comprising capturing (E280) data relating to said service, the data capturing triggering sending of said service request (Req).

5. Method according to Claim 4, wherein the data are obtained from a QR code or NFC tag code.

6. Method according to any one of Claims 1 to 5, furthermore comprising sending information concerning the location of said terminal (T) to the service provision device (SRV).

7. Method for personalizing service requests by a service request personalization device (P), said method comprising:
- receiving (F300) a first service request (Req) associated with an anonymous unique identifier (CUA) from a communication terminal (T), the first service request (Req) enabling the service request personalization device (P) to generate a second request (ReqM) on the basis of said first service request (Req), said second request (ReqM) being personalized based on data previously recorded by the service request personalization device in association with said anonymous unique identifier (CUA).

8. Method according to Claim 7, comprising sending (F600) said second request (ReqM) to said service provision device (SRV).

9. Method according to Claim 7 or 8, comprising recording, in a database (BD), information relating to the first request indexed by the anonymous unique identifier.

10. Method according to Claim 9, comprising consulting said database (BD), said second request being obtained by modifying (F500) the first request based on a result of said consultation.

11. Computer program (PROG1, PROG1b, PROG2) comprising instructions for carrying out the steps of a method for requesting a personalized service according to any one of Claims 1 to 6 or the steps of a method for personalizing service requests according to one of Claims 7 to 10.

12. Computer-readable recording medium on which a computer program according to Claim 11 is recorded.

13. Communication terminal (T) configured to request a personalized service, and **characterized in that** it comprises:
- an identification obtainer (mID) configured to obtain, following an unlocking (E060) of an 3access to a personalized service request device implemented in the terminal (T), an anonymous unique identifier (CUA) capable of being transmitted by said terminal (T), in association with a service request, to a service request personalization device (P), the service request being intended for a service provision device (SRV).

14. Service request personalization device (P), comprising:
- a transmitter (mCOM') configured to receive a first service request (Req) associated with an anonymous unique identifier (CUA) from a communication terminal (T), the first service request (Req) enabling the service request personalization device (P) to generate a second request (ReqM) on the basis of said first service request (Req), said second request (ReqM) being personalized based on data previously recorded by the service request personalization device in association with said anonymous unique identifier (CUA).
